(19) Europäisches Patentamt

European Patent Office

Office européen des brevets

(11) EP 0 655 344 B1

(12) EUROPEAN PATENT SPECIFICATION

(45) Date of publication and mention
of the grant of the patent:
28.01.1998 Bulletin 1998/05

(51) Int. Cl.⁶: **B41M 1/30**

(21) Application number: 95200416.6

(22) Date of filing: 31.05.1988

(54) **Method of generating overhead transparency projections using an ink-jet device**

Verfahren zur Herstellung von Transparentfolien durch Tintenstrahlschreiben für die Overhead-Projektion

Méthode pour la réalisation par jets d'encre de feuilles transparentes pour la projection verticale

(84) Designated Contracting States:
DE FR GB IT

(30) Priority: 01.06.1987 US 57132

(43) Date of publication of application:
31.05.1995 Bulletin 1995/22

(62) Document number(s) of the earlier application(s) in accordance with Art. 76 EPC:
88304952.0 / 0 294 156

(73) Proprietor:
Hewlett-Packard Company
Palo Alto, California 94304 (US)

(72) Inventors:
• Morris, Peter C.
El Cajon, CA 92026 (US)
• Palmer, Donald J.
San Diego, CA 92129 (US)

(74) Representative:
Jehan, Robert et al
Williams, Powell & Associates,
34 Tavistock Street
London WC2E 7PB (GB)

(56) References cited:
US-A- 4 087 825          US-A- 4 540 996
US-A- 4 617 580

# Description

## TECHNICAL FIELD

This invention is related to ink-jet devices, such as ink-jet printers, and, more particularly, to methods of enhancing and optimizing image density on transparent media, such as surface-modified polyester films for use in overhead transparency projection.

## BACKGROUND ART

The use of ink-jet printers to form images such as alpha-numeric characters and graphics on absorbent media such as paper is well-known.

However, the use of the same inks on transparent media, such as polyester films, commonly known as Mylar, has not produced the same high optical density of print, which results in intense colors, obtained with inherently absorbent media. As is currently available, such non-absorbing media, even when an "ink-receptive" coating is applied, suffer from inherently long drying times, moisture sensitivity, non-homogeneous area fill, and low optical densities.

Attempts have been made to remedy the situation in which ink-jet transparencies are slow to dry or lack capacity to absorb sufficient volumes of ink, with a goal of approaching performance obtained with highly absorbent media. One such attempt is described in a technical paper by D. R. Titterington et al, "Development of a Transparent Receiving Sheet for Ink-Jet Printing", Journal of Imaging Science, Vol. 30, No. 1, pp. 4-8 (Jan/Feb 1986). This paper describes the use of certain transparent hydrophilic coatings to permit the use of aqueous-based inks for printing on transparent media. However, this reference addresses the problem of slow drying transparencies and does not disclose ways to improve image quality.

While such coatings are useful, considerable work remains to be done to develop suitable inks and methods of application that permit substantially uniform high color density images to be produced on transparent, non-absorbing media approaching that which can be produced on absorbing media such as paper.

US-A-4 540 996 discloses a method of forming a multicolour droplet by printing droplets of one colour in a first pass and superimposing on these droplets formed of a second colour in a second pass.

US-A-4 617 580 discloses a method of forming multicolour droplets by printing droplets of one colour in a first pass and partially overlapping these with droplets of a second colour printed in a second pass.

In accordance with the invention, a method is provided for improving the image quality generated on an optically transparent receiver sheet that has been coated with an ink-receptive layer, by the strategic application of individual ink droplets as applied by an ink-jet device. An example of an ink-receptive coating comprises a water-insoluble, polyvinyl pyrrolidone-based hydrophilic coating, available from Arkwright, Inc., Fiskeville, RI, under the trade designation TP161.

Accordingly, the invention provides a method of printing at least two dots of ink as specified in claim 1.

The advantage of the method of the invention is that higher density images can be achieved without suffering from ink coalescence or drip-lines. Thus, for example, overhead transparency projections, such as formed on a polyester (Mylar) film that is coated with an ink-receptive coating, evidence a more homogeneous, higher intensity of color than heretofore obtained.

## BRIEF DESCRIPTION OF THE DRAWINGS

FIG. 1a is a diagrammatic, top plan view, showing a series of coalescing drops printed by prior art methods;

FIG. 1b is a diagrammatic, top plan view, depicting the area-fill resulting from the prior art printing methods;

FIG. 2a is a diagrammatic, top plan view, showing the pattern of a series of non-coalescing drops, printed in accordance with the invention; and

FIG. 2b is a diagrammatic, top plan view, depicting the area-fill resulting from the teaching of the invention.

## BEST MODES FOR CARRYING OUT THE INVENTION

A single pass, or scan, of a print head depositing an amount of ink on the afore-mentioned overhead projection transparency receiver sheet yields a non-uniform, low quality image, as a consequence of undesirable drop displacement due to film motion, gravity and drop-to-drop cohesion. The result is a non-homogeneous, low optical density image.

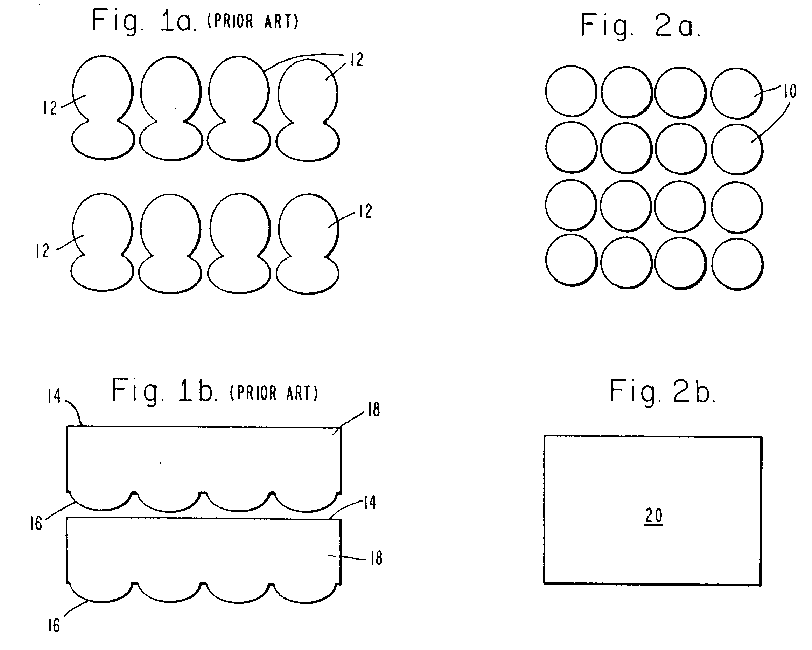

It is observed microscopically than each individual ink-jet droplet 10, printed in a pattern such as shown in FIG. 2a, can coalesce with adjacent droplets to form droplets 12, shown in FIG. 1a, which induce area-fill patterns that are substantially non-homogeneous. Furthermore, under conditions of considerable coalescence and with the overhead projection overhead transparency receiver sheet oriented in a vertical plane during printing, a phenomenon known as "drip lines" is observed. The phenomenon of drip lines is a result of a substantially large volume of ink located on the surface of the transparency receiver sheet which is influenced by gravity. Instead of the preferred absorption of individual droplets into the coated receiver sheet, these large coalesced drops 12 migrate downward along the vertically-oriented page, as shown in FIG. 1a. The result is a notable color striation that exists along each printed swath 18 by virtue of the solid density gradient that results from each drop migration.

In addition, drip lines aggravate the problem of color area-fill homogeneity by preventing the merging of adjacent drops along the top 14 and bottom 16 dot rows of the printed swath 18, as shown in FIG. 1b.

A single scan employing the necessary volume of ink required to avoid drop coalescence should meet the following condition at the time of printing a drop:

$$\varnothing \leq 1/D \qquad \text{Eqn. 1}$$

where $\varnothing$ is the spot diameter and D is the dot-to-dot spacing (resolution).

However, the volume of ink described by Eqn. 1 may not provide the desired color density for overhead transparency projections. Therefore, in accordance with this invention, the use of at least one successive pass of the ink-jet printing device, where the conditions of Eqn. 1 are met, provides a substantially improved color density.

FIG. 2a shows the printing of dots 10 in accordance with the invention. It will be observed that coalescence is not present. In FIG. 2b, the area-fill pattern 20 is seen to be substantially completely filled and homogeneous, in contrast to the prior art methods resulting in the area-fill depicted in FIG. 1b.

Eqn. 1 may be used to determine the time period for printing two adjacent dots. Such printing may be done at time t=0 up to time t=≈10 sec. Typically, the time differential is about 2 sec. The governing parameter is that the second drop being printed should not violate Eqn. 1.

The method of the invention is applicable to any ink-jet printer, ink and medium combination. The time required between depositing superimposed drops of ink at adjacent locations is readily determined by measuring the time taken for the disappearance of drip lines or coalescence.

Also the method of the invention is applicable to any transparency substrate material, either hydrophilic or hydrophobic, provided Eqn. 1 and the aforementioned conditions are obeyed. Examples of suitable media include films of polyesters, cellulose and cellulose acetates, styrenes, polypropylenes, polyvinylchloride, and the like.

INDUSTRIAL APPLICABILITY

The method of the invention is applicable to forming overhead transparency projections using ink-jet printing.

Example

A first dot of ink is printed at a particular location during a first scan of a line. A sufficiently long delay is provided to allow the first dot of ink to be absorbed into the medium. A second dot of ink is then printed over the first dot of ink during a second scan of the line, the dot being separated from an adjacent dot by a dot-to-dot spacing measured by the number of dots per unit length. The amount of ink used generates a printed dot diameter $\varnothing$ which meets the condition $\varnothing \leq 1/D$, where D is the number of dots per unit length.

Thus, there has been disclosed a method of generating overhead transparency projections by ink-jet printers in which a time delay is employed to print adjacent dots of colour.

Other aspects of the subject matter disclosed herein are covered in our European patent application no. 88304952.0, from which this is a divisional application.

**Claims**

1. A method of printing at least two dots of ink sequentially at a particular location to form a spot on an ink-receptive transparent medium by an ink-jet printer comprising printing a first dot of ink at said location during a first scan of a line, delaying a time sufficiently long to allow the first dot of ink to absorb into said ink-receptive medium, and printing a second dot of ink at said location over said first dot of ink during a second scan of said line, said dot separated from an adjacent dot by a dot-to-dot spacing as measured by the number of dots per unit length, wherein the printed dot diameter $\varnothing$ meets the condition $\varnothing \leq 1/D$, where D is the number of dots per unit length.

2. The method of claim 1, wherein only one dot of ink is printed on said medium at selected locations during the first scan of said line, and a second dot of ink, is printed at said locations during the second scan of said line.

**Patentansprüche**

1. Ein Verfahren zum aufeinanderfolgenden Drucken von zumindest zwei Tintenpunkten an einer bestimmten Position, um mittels eines Tintenstrahldruckers einen Punkt auf einem Tinten-aufnahmefähigen transparenten Medium zu bilden, wobei das Verfahren folgende Schritte aufweist: Drucken eines ersten Tintenpunktes an der Position während eines ersten Durchlaufs einer Zeile, Verzögern um eine ausreichend lange Zeit, um zu ermöglichen, daß der erste Tintenpunkt in das Tinten-aufnahmefähige Medium absorbiert wird, und Drucken eines zweiten Tintenpunktes an der Position über den ersten Tintenpunkt während eines zweiten Durchlaufs der Zeile, wobei der Punkt von einem benachbarten Punkt um einen Punkt-Zu-Punkt-Abstand getrennt ist, der durch die Anzahl von Punkten pro Einheitslänge bestimmt ist, wobei der Durchmesser $\varnothing$ des gedruckten Punktes die Bedingung $\varnothing \leq 1/D$ erfüllt, wobei D die Anzahl von Punkten pro Einheitslänge ist.

**2.** Das Verfahren gemäß Anspruch 1, bei dem lediglich ein Tintenpunkt während des ersten Durchlaufs der Zeile an ausgewählten Positionen auf das Medien gedruckt wird, und ein zweiter Tintenpunkt während des zweiten Durchlaufs der Zeile an den Positionen gedruckt wird.

**Revendications**

**1.** Procédé pour imprimer au moins deux points d'encre en séquence sur un emplacement particulier pour former une tache sur un support transparent réceptif pour l'encre au moyen d'une imprimante à jet d'encre, comprenant les phases consistant à imprimer un premier point d'encre audit emplacement pendant un premier balayage d'un ligne, laisser s'écouler un temps suffisamment long pour permettre au premier point d'encre d'être absorbé dans ledit support réceptif pour l'encre, et imprimer un deuxième point d'encre audit emplacement par dessus ledit premier point d'encre pendant un deuxième balayage de ladite ligne, ledit point étant séparé d'un point adjacent par un espacement point-point mesuré par le nombre de points par unité de longueur, dans lequel le diamètre $\varnothing$ du point imprimé satisfait la condition $\varnothing \leq 1/D$, où D est le nombre de points par unité de longueur.

**2.** Procédé selon la revendication 1, dans lequel un seul point d'encre est imprimé sur ledit support à des emplacements sélectionnés pendant le premier balayage de ladite ligne, et un deuxième point d'encre est imprimé sur lesdits emplacements pendant le deuxième balayage de ladite ligne.

Fig. 1a. (PRIOR ART)

Fig. 2a.

Fig. 1b. (PRIOR ART)

Fig. 2b.

EP 0 655 344 B1